# EUROPEAN PATENT APPLICATION

(11) **EP 4 711 092 A1**
(43) Date of publication of application: **18.03.2026**
(21) Application number: 24020287.9
(22) Date of filing: 12.09.2024
(51) Int. Cl.: B25J 9/00, B25J 13/02, B25J 15/00

(54) **ADAPTIVE ROBOT CONTROL SYSTEM FOR CONTROLLING A WELDING ROBOT**

(71) Applicant: Seam Technology d.o.o., 40000 Cakovec (HR)
(72) Inventor: Vurusic, Sasa, 42203 Jalzabet (HR)
(74) Representative: Pejcinovic, Tomislav

(57) **Abstract**

An adaptive robot control system for controlling a welding robot comprising a mobile robot controller handle and a robot control unit. Wherein the mobile robot controller handle is wirelessly connected to a robot control unit. The mobile robot controller handle has attachment means for attaching mobile robot controller handle on a distal part of a robotic arm or on the robot control unit enabling the user to control the welding robot remotely from the position closer to the working piece.

## Description

### Field of the Invention

The present invention relates to robot control system for controlling a welding robot designed to facilitate the control of a welding robot. More specifically, it concerns an adaptive control system comprising a mobile robot controller handle and a robot control unit, which are wirelessly connected to enhance the operation and flexibility of a welding robotic systems.

International classification class B25J 9/22.

### Art Background

Robots are increasingly utilized in various industries for tasks requiring precision and efficiency. Traditionally, controlling these robots involved cumbersome wired connections and fixed control units, which limited the operational flexibility and efficiency of the welding robots. There is a need for an improved control system that offers more versatility and ease of use, particularly for robots that require frequent adjustments and movements.

### Related Art

Many industrial robots, machine tools, and similar equipment are installed at production sites like plants and factories. To control such machinery, wireless control devices have been developed to meet the need for operators to perform operations and maintenance without the restrictions of cables. For example, the technique disclosed in the patent document JP2011224777 improves operator convenience by wirelessly connecting a teach pendant used for programming an industrial robot to the robot's controller. This technique includes a switch control ladder section on the controller, which is designed to send a power interrupt instruction to a servo driver in the robot if unintended operations occur due to operator error.

In wireless control systems, the power is typically supplied by a battery within the device. Consequently, the operational time of the wireless control device is limited to the battery's power duration. Therefore, there is a significant demand for power-saving measures in devices with a limited external power supply, such as wireless control apparatuses. For instance, the patent document JP2013168703 discloses a power-saving technique for displaying images on a mobile terminal that operates with a limited power supply from an external source.

### Summary of the Invention

Adaptive robot control system designed particularly for welding robots, comprises a mobile robot controller handle and a robot control unit in a combination with a collaborative robot. A collaborative robot, or cobot, is a type of robot designed to work alongside humans in a shared workspace, unlike traditional industrial robots, which typically operate in isolated environments for safety reasons. Cobots are engineered with features that make them safe, flexible, and easy to use. The need for a such adaptive robot control system lies in complexity of low to medium series manufacturing where fully robotised manufacturing line is not financially viable option. Furthermore, complicated welding in the low series production often needs flexibility and adaptation of the welding scenarios to accommodate to different product designs and differences between succeeding batches of produced items. On-the-Fly adjustments of the welding scenarios are essential to shorten the production time, by allowing human operators to make modifications on the equipment and or customize the welding scenarios. Fully robotic manufacturing lines, on the other hand, do not allow such flexibility as they work by the predefined scenarios and are particularly not suitable for low production series where production requirements are frequently changing or are unpredictable in even short time span.

Adaptive robot control system for controlling a welding robot can be used for various welding tasks across different industries. Uses are not limited to specific products or processes precisely because of the adaptability of the control system which allows that the user can reconfigure the welding path for different welding requirements, allowing manufacturers to adapt quickly to new projects, materials, and designs without significant downtime or additional costs.

The adaptability of the welding system can significantly reduce production downtime as the changes are done much quicker than on fully automatic welding system. In comparison, to manual welding, adaptive robot control system for controlling a welding robot enables faster production with reproducible quality and reduces errors made by human operators.

### Detailed Description

The adaptive robot control system for controlling a welding robot (100), comprising a mobile robot controller handle (101) and a robot control unit (102), wherein the mobile robot controller handle (101) is wirelessly connected to the robot control unit (102), the mobile robot controller handle (101) is ergonomically designed for users comfortable use over extended periods of time and includes control buttons that enable precise maneuvering of the welding robot, the robot controller handle (101) also incorporates a wireless communication module that uses a wireless protocol to facilitate untethered operation, the robot control unit (102) serves as the central processing hub, interpreting commands from the mobile robot controller handle (101) and sending them to the welding robot (100), the robot control unit (102) is equipped with a wireless receiver to capture signals from the robot controller handle (101) and it is hard wired to the welding robot (100). Signals are transmitted on 24V voltage. Robot control unit (102) can also be wirelessly connected to the welding robot (100), although hard wiring is preferred as it makes data transfer more robust.

In one embodiment the adaptive robot control system for controlling a welding robot (100) has attachment means (103) for attaching the mobile robot controller handle (101) on a distal part of a robotic arm (104) or on the robot control unit (102), the mobile robot controller handle (101) is designed to provide flexible and ergonomic control of the welding robot (100), comprising at least one tactile input device (105) that allow the operator to maneuver the robot with precision, the handle is wirelessly connected to the robot control unit (102) using the wireless communication protocol which are well known in the art, the attachment means (103) are designed to securely attach the mobile robot controller handle (101) to the distal part of a robotic arm (104) or directly onto the robot control unit (102), this feature provides operators with the flexibility to either control the welding robot remotely or attach the handle directly to the robot for more integrated control. The attachment means (103) include mechanisms such as quick-release systems or magnetic attachments that facilitate easy and secure attachment and detachment of the mobile robot controller handle (101), this ensures that the mobile robot controller handle (101) can be swiftly repositioned or removed as needed, this is a very important technical feature, needed to solve the problem of controlling the welding robot (100) in a working environment. Attachment means (103) may comprise a sliding groove on the mobile robot controller handle (101) and tongue on the side of the robotic arm onto which the sliding groove slides onto, establishing well known assembly method in the art known as tongue and groove assembly. Further, the attachment means (103) may comprise magnets on both the mobile robot controller handle (101) and robotic arm (104). These attachments are already known in the art and a person skilled in the art may also be aware of similar attachment means.

In further embodiment mobile robot controller handle (101) has attachment means (103) for attaching the mobile robot controller handle (101) on a proximal part of a robotic arm (104). The mobile robot controller handle (101) is designed to provide comfortable and precise control of the welding robot (100), incorporating at least one tactile input device (105) to enable accurate maneuvering.

Proximal part of the robotic arm (104) is the part of the robotic arm (104) which is farther from the rest of the welding robot (100) and intended to be equipped with the welding equipment. Distal part of the robotic arm (104) is the part directly connected to the welding robot (100).

The handle is wirelessly connected to the robot control unit (102), the attachment means (103) are specifically designed to securely attach the mobile robot controller handle (101) to the proximal part of the robotic arm (104), this allows the operator to control the welding robot (100) either remotely or directly from the welding robot (100) itself, enhancing operational flexibility, the attachment means (103) include mechanisms such as quick-release systems or magnetic attachments that facilitate easy and secure attachment and detachment of the mobile robot controller handle (101), ensuring that the mobile robot controller handle (101) can be quickly repositioned or removed as needed, this design feature enhances the adaptability and usability of the welding robot (100) control system, providing improved mobility, precision, and safety in welding operations.

The mobile robot controller handle (101) has at least one tactile input device (105), which the user can press in order to send a command to the robot control unit (102). Tactile input device (105) is needed so that the operator instantly has positive tactile feedback upon giving a command to the mobile robot controller handle (101).

Tactile feedback is needed in the working environment as it gives the operator reassuring feedback that a command was made at mobile robot controller handle (101) and sent to robot control unit (102).

In further embodiment, the mobile robot controller handle (101) additionally comprises at least one visual feedback device (106). Visual feedback device (106) is a redundant mean of giving additional feedback to the operator that the command has been given the mobile robot controller handle (101). Visual feedback serves as reassuring feedback additionally to the positive tactile feedback of the tactile input device (105).

In further embodiment the mobile robot controller handle (101) additionally comprises at least one sound feedback device (107). Sound feedback device (107) is a redundant mean of giving additional feedback to the operator that the command has been given from the mobile robot controller handle (101). Sound feedback serves as reassuring feedback additionally to the positive tactile feedback of the tactile input device (105).

The mass of the mobile robot controller handle (101) does not exceed 450 grams, this lightweight design ensures that the mobile robot controller handle (101) is easy to maneuver and reduces operator fatigue during extended periods of use, the ergonomic design of the mobile robot controller handle (101) further enhances its usability, providing a comfortable grip that allows for precise control of the welding robot (100).

The mass of the mobile robot controller handle (101) does not exceed 450 grams, the lightweight design of the mobile robot controller handle (101) is particularly important because it is mounted on the robotic arm (104) of a welding robot (100), which in is a collaborative robot.

Additional components need to have low inertial mass to ensure safety and responsiveness, the low mass of the mobile robot controller handle (101) minimizes the inertial forces, allowing for precise and agile movements of the robotic arm (104). This is essential in welding applications where accuracy and control are essential. The reduced mass of the mobile robot controller handle (101) ensures that the robotic arm (104) can quickly and accurately adjust its position and orientation without excessive lag or overshoot, enhancing the overall performance and reliability of the welding process, the mobile robot controller handle (101) design incorporates lightweight yet durable materials, ensuring that it can withstand the demands of industrial environments while maintaining its low mass.

The ergonomic design of the mobile robot controller handle (101) further enhances its usability, reducing operator fatigue during prolonged use and allowing for more consistent and accurate welding operations, overall. The low mass of the mobile robot controller handle (101) is a critical feature that enables the adaptive robot control system for controlling a welding robot (100) to function effectively and safely in collaborative environments, ensuring high-quality welding results and improved operational efficiency.

Welding robot (100) is adapted to weld and to be teached where are the points where robotic arm (104) needs to pass to weld the material with the welding apparatus it carries. Points are defined as point in space where later welds are to be made. Welding robot (100) is teached where the points are by pressing a button on the mobile robot controller handle (101) by equal or longer than 2 seconds for one time, this action starts the teaching process where the arc will be ignited. Start of the teaching process with arc ON is marked by sound feedback and light feedback. Welding robot (100) is teached where the points are by pressing the same button by a short press which lasts less than two seconds at the moment when the operator has manually moved the robotic arm (104) exactly onto the position of the point, so that the welding apparatus is exactly at the aforementioned point. Additional points are teached by again pressing the button on the mobile robot controller handle (101) when the robotic arm (104) is moved to the second point. Teaching process with arc ON ends by pressing a button on the mobile robot controller handle (101) again for equal or longer than two seconds, again followed by sound and visual feedback. Sound feedback is made by sound feedback device (107) and visual feedback by visual feedback device (106). All other points when the arc is OFF, e.g. entry and exit points to the workpiece, are saved by pressing the same button by a short press which lasts less than two seconds. The invention can be understood by no further specifying where the button is on the on the mobile robot controller handle (101) as it is clear to the person skilled in the art that it can be made on numerous ways. Teaching is possible as there is a data exchange between the mobile robot controller handle (101) and the welding robot (100), via the robot control unit (102).

In one embodiment there may be more than one buttons on the mobile robot controller handle (101) for teaching the welding robot (100), for example on opposite sides on the mobile robot controller handle (101) to allow for a ambidextrous use of the mobile robot controller handle (101).

The adaptive robot control system for controlling a welding robot (100) has attachment means (103) between the robot arm (104) and the mobile robot controller handle (101) which may be purely mechanical. The adaptive robot control system for controlling a welding robot (100) is designed to improve the flexibility and efficiency of welding operations by utilizing mechanical attachment mechanisms. The mechanical attachment means (103) provide a secure and reliable connection between the robot arm (104) and the mobile robot controller handle (101), ensuring that the mobile robot controller handle (101) remains firmly attached during the welding process while allowing for quick and easy attachment and detachment when necessary. This feature is particularly advantageous in dynamic welding environments where frequent input to the adaptive robot control system for controlling a welding robot (100) is required.

In a further embodiment, the adaptive robot control system for controlling a welding robot (100), has attachment means (103) between the robot arm (104) and the mobile robot controller handle (101) which may be magnetical. The adaptive robot control system for controlling a welding robot (100) is designed to improve the flexibility and efficiency of welding operations by utilizing advanced magnetical attachment mechanisms.

The magnetical attachment means (103) provide a secure and reliable connection between the robot arm (104) and the mobile robot controller handle (101), ensuring that the mobile robot controller handle (101) remains firmly attached during the welding process while allowing for quick and easy attachment and detachment when necessary. This feature is particularly advantageous in dynamic welding environments where frequent reconfiguration setup of the adaptive robot control system for controlling a welding robot (100) is required.

The adaptive robot control system for controlling a welding robot (100), comprises the robot control unit (102) which is able to transfer and receive data from the robot (100). This is designed to establish the communication between the mobile robot controller handle (101) and the welding robot (100), ensuring efficient and precise control of welding operations in teaching process.

The adaptive robot control system for controlling a welding robot (100), comprises the mobile robot controller handle (101) which is wirelessly connected to a robot control unit (102) within the frequency band from 2.4 GHz to 2.5 GHz. This wireless connection is crucial for providing operators with the flexibility to control the welding robot (100) remotely with high precision. The frequency band from 2.4 GHz to 2.5 GHz is selected for its reliability and widespread use in wireless communication, ensuring a stable and interference-free connection. To achieve a robust connection and fast reestablishment times if the connection gets lost, the system may utilize the Wi-Fi 6 (802.11ax) protocol. Wi-Fi 6 is optimal for its high data transfer rates, low latency, and efficient performance in environments with multiple devices. Additionally, it supports features like Target Wake Time (TWT) which helps in managing network traffic efficiently and reduces latency, ensuring quick reconnection. The use of Wi-Fi 6 ensures that the system can handle the high demands of industrial environments, providing reliable and continuous communication between the mobile robot controller handle (101) and the robot control unit (102), although older Wi-Fi protocolls may also be used. This setup allows for transmission of control signals and feedback, enhancing the responsiveness and accuracy of the welding operations. The wireless connection eliminates the need for cables, improving the mobility and ease of use of the mobile robot controller handle (101). The design ensures that the wireless communication is robust and secure, capable of operating in industrial environments where other wireless signals may be present. By utilizing the 2.4 GHz to 2.5 GHz frequency band and the Wi-Fi 6 protocol, the adaptive robot control system for controlling a welding robot (100) achieves an optimal balance between range, data transfer speed, and resistance to interference. Wireless connection between the mobile robot controller handle (101) and the robot control unit (102) is reestablished in less than or equal to 0.25 seconds. This feature is crucial for maintaining continuous and precise control of the welding robot (100) during operations, ensuring that any temporary loss of connection does not significantly impact the teaching process. Teaching process is a process of enetring points one by one, robot will later weld material according to those points by moving robotic arm (104) accordingly and performing welding.

The adaptive robot control system for controlling a welding robot (100), comprises the mobile robot controller handle (101) which has an internal energy storage device (108).

The internal energy storage device (108) may be a lithium-ion battery, which is optimal for providing a reliable and long-lasting power source. The use of a lithium-ion battery ensures that the mobile robot controller handle (101) can operate for extended periods without needing frequent recharging. This is crucial for maintaining continuous operation of the adaptive robot control system for controlling a welding robot (100) in industrial settings, where interruptions can be costly and disruptive. Additionally, lithium-ion batteries are known for their high energy density, long cycle life, and low self-discharge rate.

Of course, other types of batteries would also be suitable for powering the mobile robot controller handle (101).

The adaptive robot control system for controlling a welding robot (100), wherein the mobile robot controller handle (101) has a connector (109) for charging the internal energy storage device (108). To ensure a robust and reliable recharging connection, the connector (109) is designed to support fast-charging capabilities and utilizes standard connection types commonly used in industrial devices, such as USB Type-C and industrial-grade DC barrel connectors.

USB Type-C is particularly favoured for its high-power delivery capabilities, reversible connector orientation, and widespread adoption in industrial applications. This connector supports fast-charging protocols, allowing for efficient energy transfer to the internal energy storage device (108), which may be a lithium-ion battery. The use of USB Type-C ensures compatibility with a wide range of power sources and charging equipment, making it a versatile and reliable choice for industrial environments. Additionally, the industrial-grade DC barrel connector is known for its durability and secure connection, providing a stable and consistent power supply during the charging process.

The connector (109) is designed with robust mechanical construction to withstand the harsh conditions typically found in industrial settings. This includes features such as reinforced housing and secure locking mechanisms to prevent accidental disconnection during operation. The integration of advanced charging circuits within the mobile robot controller handle (101) manages the charging process, protecting the internal energy storage device (108) from overcharging, overheating, and other potential issues that could reduce its lifespan.

To further enhance the system's efficiency and reliability, the mobile robot controller handle (101) comprises energy optimisation unit (110) that optimize battery usage and prolong battery life. These features may include intelligent charging circuits, power-saving modes, and real-time battery monitoring systems that provide feedback on the battery's status and health. By ensuring that the internal energy storage device (108) is well-managed, the system can maintain robust and uninterrupted operation.

Moreover, the integration of a lithium-ion battery supports the wireless functionality of the mobile robot controller handle (101), allowing it to maintain a stable connection with the robot control unit (102) even during power fluctuations or in environments with varying power availability. The wireless connection, which operates within the frequency band from 2.4 GHz to 2.5 GHz, ensures that the control signals and feedback are transmitted in real-time, enhancing the responsiveness and accuracy of the welding operations.

In case the wireless connection is lost, the system is designed to reestablish the connection quickly and efficiently. This is achieved through the use of the Wi-Fi 6 (802.11ax) protocol, which offers high data transfer rates, low latency, and robust performance in environments with multiple devices.

Wi-Fi 6 supports features such as Target Wake Time (TWT) and advanced channel access mechanisms, which help manage network traffic and reduce latency, ensuring that the connection between the mobile robot controller handle (101) and the robot control unit (102) is reestablished rapidly.

The adaptive robot control system for controlling a welding robot (100), comprises the robot control unit (102) which has a status display (111) for the internal energy storage device (108). The status display (111) is designed to provide real-time information about the internal energy storage device (108), which may be a lithium-ion battery. This display enhances the user experience by offering immediate feedback on the battery's charge level, health, and remaining operational time, enabling operators to manage the energy usage efficiently and plan recharging intervals accordingly.

The integration of the status display (111) with the energy storage device (108) ensures that users are always aware of the battery's condition, reducing the risk of unexpected power loss during critical operations. The status display (111) can show various metrics such as current charge percentage, estimated runtime, charging status, and alerts for low battery or maintenance needs.

The adaptive robot control system for controlling a welding robot (100), comprises the attachment means (103) which are a sliding tongue and groove assembly. This attachment mechanism provides a secure, stable, and easily adjustable connection between the mobile robot controller handle (101) and the robotic arm (104). The sliding tongue and groove assembly is designed for quick attachment and detachment. This mechanical connection ensures that the mobile robot controller handle (101) remains firmly in place during welding operations, minimizing vibrations and movement that could affect the precision of the weld.

The adaptive robot control system for controlling a welding robot (100), has at least 90% of the outer surface of the mobile robot controller handle (101) made out of metal. This design ensures the durability and robustness required for industrial environments, providing protection against physical impacts, environmental conditions. The metal construction enhances the structural integrity of the mobile robot controller handle (101), ensuring long-term reliability and performance.

To enable wireless connectivity, a portion of the outer surface of the mobile robot controller handle (101) is made from an electromagnetic transmissive material, such as polymer. This material selection allows for the seamless transmission of wireless signals between the mobile robot controller handle (101) and the robot control unit (102). By placing this material in areas that maximize signal transmission without compromising the structural strength and protective qualities of the metal housing, the adaptive robot control system for controlling a welding robot (100) maintains robust and reliable wireless communication.

### Brief Description of the Drawings

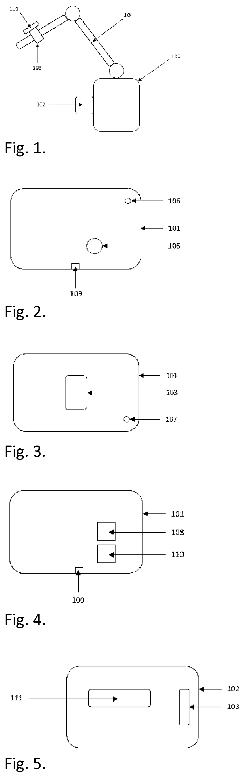

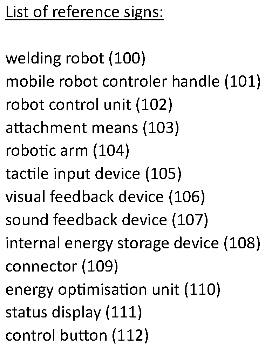

Fig. 1 depicts the adaptive robot control system, showing the robot control unit and the mobile robot controller handle which is attached to the robotic arm.
Fig. 2 depicts the front side of the robot controller handle
Fig. 3 depicts the rear of the robot controller handle
Fig. 4 depicts the internal energy storage device, connector and the energy optimisation unit inside the robot controller handle
Fig. 5 depicts the robot control unit with status display and attachment means

## Claims

1. An **adaptive robot control system for controlling a welding robot (100)**
comprising
a **mobile robot controller handle (101)**
and
a **robot control unit (102)**
wherein
a **mobile robot controller handle (101)** is wirelessly connected to a **robot control unit (102).**

2. An **adaptive robot control system for controlling a welding robot (100),** according to claim 1,
wherein
the **mobile robot controller handle (101)** has **attachment means (103)** for **attaching mobile**
**robot controller handle (101)** on a distal part of a **robotic arm (104)** or on the **robot control unit (102).**

3. An **adaptive robot control system for controlling a welding robot (100),** according to claim 2,
wherein
the **mobile robot controller handle (101)** has **attachment means (103)** for **attaching mobile**
**robot controller handle (101)** on a proximal part of a **robotic arm (104).**

4. An **adaptive robot control system for controlling a welding robot (100),** according to claim 3,
wherein
the **mobile robot controller handle (101)** has at least one **tactile input device (105).**

5. An **adaptive robot control system for controlling a welding robot (100),** according to claim 3,
wherein
the **mobile robot controller handle (101)** comprises at least one visual feedback device (106).

6. An **adaptive robot control system for controlling a welding robot (100),** according to claim 3,
wherein
**mobile robot controller handle (101)** has at least one sound feedback device (107).

7. An **adaptive robot control system for controlling a welding robot (100),** according claim 3,
wherein
the mass of the **mobile robot controller handle (101)** does not exceed 450 grams.

8. An **adaptive robot control system for controlling a welding robot (100),** according to claim 4,
wherein
at least one **tactile input device (105)** has a **programable function.**

9. An adaptive robot control system for controlling a welding robot (100), according to claim 8,
wherein
the robot control unit (102) is hard wired to the welding robot (100) and has a status display (107).

10. An **adaptive robot control system for controlling a welding robot (100),** according to claim 9,
wherein
**mobile robot controller handle (101)** is wirelessly connected to a **robot control unit (102)** within
the frequency band from 2.4 GHz to 2.5 GHz.

11. An **adaptive robot control system for controlling a welding robot (100),** according to claim 10,
wherein
at least one **tactile input device (105)** is adapted to enable a free movement of the **robotic arm (104).**

12. An adaptive robot control system for controlling a **welding robot (100),** according to claim 12,
wherein
robot controller handle (101) has internal energy storage device (108) to power the robot controller
handle (101), energy optimisation unit (110) to save energy of the internal energy storage device
(108).

13. An **adaptive robot control system for controlling a welding robot (100),** according to claim 10,
wherein
a wireless connection between the **mobile robot controller handle (101)** and **robot control unit**
**(102) is reestablished in less or equal than 0.25 seconds.**

14. An **adaptive robot control system for controlling a welding robot (100),** according to claim 11,
wherein
**mobile robot controller handle (101)** has a **connector (109)** for charging the **internal energy storage device (108).**

15. An **adaptive robot control system for controlling a welding robot (100),** according to claim 14,
wherein
**at least 90% of the outer surface of the mobile robot controller handle (101) is metal.**

## Amended claims

### Amended claims in accordance with Rule 137(2) EPC.

**1.** An adaptive robot control system for controlling a welding robot (100) comprising
a mobile robot controller handle (101)
and
a robot control unit (102)
wherein
a mobile robot controller handle (101) is wirelessly connected to a robot control unit (102)
wherein
the mobile robot controller handle (101) has attachment means (103) for attaching mobile robot controller handle (101) on a distal part of a robotic arm (104) or on the robot control unit (102)
wherein
the mobile robot controller handle (101) has at least one tactile input device (105) wherein
the mass of the mobile robot controller handle (101) does not exceed 450 grams.

**3.** An adaptive robot control system for controlling a welding robot (100), according to claim 2,
wherein
the mobile robot controller handle (101) has attachment means (103) for attaching mobile robot controller handle (101) on a proximal part of a robotic arm (104).

**5.** An adaptive robot control system for controlling a welding robot (100), according to claim 3,
wherein
the mobile robot controller handle (101) comprises at least one visual feedback device (106).

**6.** An adaptive robot control system for controlling a welding robot (100), according to claim 3,
wherein
mobile robot controller handle (101) has at least one sound feedback device (107).

**7.** An adaptive robot control system for controlling a welding robot (100), according claim 3,
wherein
the mass of the mobile robot controller handle (101) does not exceed 450 grams.

**8.** An adaptive robot control system for controlling a welding robot (100), according to claim 4,
wherein
at least one tactile input device (105) has a programable function.

**9.** An adaptive robot control system for controlling a welding robot (100), according to claim 8,
wherein
the robot control unit (102) is hard wired to the welding robot (100) and has a status display (107).

**10.** An adaptive robot control system for controlling a welding robot (100), according to claim 9,
wherein
mobile robot controller handle (101) is wirelessly connected to a robot control unit (102) within
the frequency band from 2.4 GHz to 2.5 GHz.

**11.** An adaptive robot control system for controlling a welding robot (100), according to claim 10,
wherein
at least one tactile input device (105) is adapted to enable a free movement of the robotic arm (104).

**12.** An adaptive robot control system for controlling a welding robot (100), according to claim 11,
wherein
robot controller handle (101) has internal energy storage device (108) to power the robot controller handle (101), energy optimisation unit (110) to save energy of the internal energy storage
device (108).

**13.** An adaptive robot control system for controlling a welding robot (100), according to claim 10,
wherein
a wireless connection between the mobile robot controller handle (101) and robot control unit (102) is reestablished in less or equal than 0.25 seconds.

**14.** An adaptive robot control system for controlling a welding robot (100), according to claim 11,
wherein
mobile robot controller handle (101) has a connector (109) for charging the internal energy storage device (108).

**15.** An adaptive robot control system for controlling a welding robot (100), according to claim 14,
wherein
at least 90% of the outer surface of the mobile robot controller handle (101) is metal.
